# EUROPÄISCHE PATENTSCHRIFT

(11) **EP 3 382 349 B1**
(45) Veröffentlichungstag und Bekanntmachung des Hinweises auf die Patenterteilung: **15.05.2019**
(21) Anmeldenummer: 17163542.8
(22) Anmeldetag: 29.03.2017
(51) Int. Cl.: G01D 5/347, G01D 3/028

(54) **WINKELMESSSYSTEM**
ANGLE MEASURING SYSTEM
SYSTÈME DE MESURE D'ANGLE

(43) Veröffentlichungstag der Anmeldung: 03.10.2018
(73) Patentinhaber: Dr. Johannes Heidenhain GmbH, 83301 Traunreut (DE)
(72) Erfinder: MITTERREITER, Johann, 83339 Chieming (DE); NIEMEYER, Sonja, 83368 Georgen (DE); HERTENBERGER, Jürgen, 84155 Bodenkirchen (DE); KAFFL, Georg, 83098 Brannenburg (DE)

(56) Entgegenhaltungen:
- EP-A1- 1 447 579
- EP-A2- 2 378 251
- WO-A2-2010/031608
- JP-A- 2001 289 668

## Beschreibung

Die Erfindung betrifft ein Winkelmesssystem gemäß dem Patentanspruch 1. Derartige Winkelmesssysteme dienen zur Messung von Drehbewegungen einer Welle über eine oder mehrere Umdrehungen. Die Drehbewegung wird dabei entweder inkremental oder absolut erfasst, der ausgegebene Messwert ist abhängig davon eine Folge von Zählimpulsen ein Zählerwert oder ein Codewort. Winkelmesssysteme werden insbesondere bei Werkzeugmaschinen beziehungsweise Bearbeitungszentren für die Messung von rotatorischen Bewegungen eingesetzt. Die Bestimmung der Drehwinkel auf nur wenige Winkelsekunden genau ist beispielsweise für Rundtische oder Schwenkköpfe von Werkzeugmaschinen, C-Achsen von Drehmaschinen aber auch bei Druckwerken von Druckmaschinen von entscheidender Bedeutung. Da bei Verwendung von optischen Messprinzipien überaus genaue Messergebnisse erreichbar sind, werden derartige Winkelmesssysteme regelmäßig mit einem optischen Messsystem ausgestattet. In diesem Fall wird eine Winkelskalierung häufig durch ein Auflicht- oder ein Durchlichtverfahren abgetastet.

Um eine hohe Messgenauigkeit zu gewährleisten ist es wichtig, dass die Winkelskalierung vor Verunreinigungen geschützt ist. Besonders nachteilig kann es sein, wenn Schmiermittel oder Bestandteile davon aus dem Wälzlager austreten und sich an der Abtasteinrichtung der Winkelskalierung oder im Bereich der Winkelskalierung selbst niederschlagen. Derartige Verunreinigungen sind häufig als Tröpfchen ausgebildet und entfalten eine optische Wirkung, ähnlich einer Linse. Entsprechend werden unter solchen Umständen die Lichtstrahlen abgelenkt, was zu einer Fehlmessung führen kann.

### STAND DER TECHNIK

Aus der EP 2378251 A2 der Anmelderin ist ein Winkelmesssystem bekannt, das eine Welle mit einer Rille aufweist, welche mit einem Hohlraum zur Aufnahme von Schmiermittel verbunden ist.

Weiterhin ist aus der WO 2010/031608 A2 eine Winkelmesseinrichtung bekannt, die mit einem Unterdruck beaufschlagbar ist um Verunreinigungen abzusaugen.

### ZUSAMMENFASSUNG DER ERFINDUNG

Der Erfindung liegt die Aufgabe zugrunde, ein Winkelmesssystem zu schaffen, durch das eine hohe Messgenauigkeit zuverlässig erreichbar ist.

Diese Aufgabe wird erfindungsgemäß durch die Schaffung eines Winkelmesssystems mit den Merkmalen des Patentanspruchs 1 gelöst.

Demnach umfasst das Winkelmesssystem eine erste Bauteilgruppe und eine zweite Bauteilgruppe, wobei zwischen den Bauteilgruppen Wälzkörper angeordnet sind, so dass die erste Bauteilgruppe relativ zur zweiten Bauteilgruppe um eine Achse drehbar gelagert ist. Die erste Bauteilgruppe weist ein erstes Bauteil und eine Winkelskalierung auf, wogegen die zweite Bauteilgruppe ein zweites Bauteil und eine Abtasteinrichtung aufweist. Durch die Abtasteinrichtung ist ein von der Stellung der Winkelskalierung (relativ zur zweiten Bauteilgruppe) abhängiges Positionssignal erzeugbar, das also eine Information über die Winkelposition beinhaltet. Zwischen dem ersten Bauteil und dem zweiten Bauteil erstreckt sich ein Spalt mit axialer Ausdehnung, so dass die Bauteile beidseits des Spaltes berührungsfrei zueinander angeordnet sind. Am ersten Bauteil ist ein ringförmiger erster Körper befestigt, der bezüglich der zweiten Bauteilgruppe berührungslos angeordnet ist, wobei das zweite Bauteil einen Abschnitt aufweist, welcher mit radialem Spalt einem sich in axialer Richtung erstreckenden Bereich des ersten Körpers radial außerhalb gegenüberliegt. Der erste Körper ist um die Achse umlaufend und in Bezug auf die Wälzkörper radial außerhalb liegend angeordnet. Der erste Körper ist weiterhin so ausgestaltet, dass durch diesen Schmiermittel aufnehmbar ist. Alternativ oder ergänzend ist am zweiten Bauteil ein ringförmiger zweiter Körper befestigt, der bezüglich der ersten Bauteilgruppe berührungslos angeordnet ist. Dabei weist das erste Bauteil einen Abschnitt auf, welcher mit radialem Spalt einem sich in axialer Richtung erstreckenden Bereich des zweiten Körpers radial außerhalb gegenüberliegt, wobei der zweite Körper in Bezug auf die Wälzkörper radial außerhalb um die Achse umlaufend angeordnet ist und durch den zweiten Körper Schmiermittel aufnehmbar ist.

Unter dem Begriff "Bauteil" im Zusammenhang mit dem ersten Bauteil und dem zweiten Bauteil ist im Folgenenden insbesondere jeweils ein Bauteil zu verstehen, das eine umlaufende Stirnfläche, insbesondere eine Schnittkreisfläche oder Schnittkreisringfläche, aufweist. Somit kann geometrisch gesehen das betreffende Bauteil eine im Wesentlichen zylindrische, insbesondere hohlzylindrische Geometrie aufweisen. Die umlaufende Stirnfläche eines jeden der Bauteile ist insbesondere orthogonal zur Achse orientiert. Somit befinden sich die beiden Stirnflächen in parallelen Ebenen, die orthogonal zur Achse orientiert sind beziehungsweise deren Normalenvektoren parallel zur Achse orientiert sind.

Insbesondere ist die Winkelskalierung relativ zum Spalt radial außen angeordnet. Der sich in radialer Richtung erstreckende Spalt zwischen den in axialer Richtung versetzt angeordneten Bauteilen, befindet sich also näher an der Achse als die Winkelskalierung, wobei insbesondere das radial innen liegende Ende des Spaltes als Bezug für die relative räumliche Anordnung verwendet werden kann.

Der erste und / oder der zweite Körper sind ringförmig ausgestaltet, wobei - für den Fall, dass das Winkelmesssystem sowohl einen ersten als auch einen zweiten Körper aufweist - diese insbesondere konzentrisch angeordnet sind und in vorteilhafter Bauweise der Mittelpunkt beziehungsweise Schwerpunkt der beiden ringförmigen Körper auf der Achse zu liegen kommt.

Mit Vorteil weist der erste beziehungsweise der zweite Körper Poren zur Aufnahme des Schmiermittels auf. Insbesondere kann der erste und / oder der zweite Körper gemischt porig ausgestaltet sein, so dass dieser sowohl geschlossene Hohlräume aufweist als auch Hohlräume, die untereinander und mit der Umgebung in Verbindung stehen. Der erste und / oder der zweite Körper können aus einem Material, welches einen Polyurethan-Kunststoff umfasst, hergestellt sein. Der erste und / oder der zweite Körper können insbesondere aus einem geschäumten Material auf Basis von Polyurethan hergestellt sein. Vorteilhafterweise weist der erste und / oder der zweite Körper ein Raumgewicht zwischen 150 kg/m³ und 300 kg/m³ auf, mit Vorteil zwischen 180 kg/m³ und 280 kg/m³.

Im Hinblick auf die Vermeidung von Verunreinigungen der Abtasteinrichtung und / oder der Winkelskalierung ist es vorteilhaft, wenn der erste oder der zweite Körper, durch den Schmiermittel aufnehmbar ist, faserfrei beziehungsweise fusselfrei ausgestaltet ist.

Vorzugsweise ist der erste Körper am ersten Bauteil axial auskragend derart angeordnet und dimensioniert, dass dieser den Spalt über seine axiale Ausdehnung hinweg abdeckt, also über die axiale Ausdehnung des Spalts hinweg abdeckt. Alternativ oder ergänzend kann der zweite Körper am zweiten Bauteil axial auskragend derart angeordnet und dimensioniert sein, dass dieser den Spalt über seine axiale Ausdehnung hinweg abdeckt. Insbesondere durchdringen der erste Körper und / oder der zweite Körper eine geometrische Ebene, die im Bereich des Spaltes zwischen den beiden Stirnflächen des ersten und des zweiten Bauteils orthogonal zur Achse angeordnet ist.

Gemäß einer Weiterbildung der Erfindung ist der erste Körper am ersten Bauteil (beispielsweise in einer umlaufenden ersten Nut) befestigt und taucht berührungslos in eine umlaufende zweite Nut im zweiten Bauteil ein. Alternativ oder ergänzend kann der zweite Körper am zweiten Bauteil befestigt sein, insbesondere in einer umlaufenden ersten Nut, und berührungslos in eine umlaufende zweite Nut im ersten Bauteil eintauchen.

Mit Vorteil ist der zweite ringförmige Körper in Bezug auf den ersten ringförmigen Körper radial außerhalb angeordnet, wobei die beiden ringförmigen Körper insbesondere konzentrisch angeordnet sind.

Die Abtasteinrichtung weist mit Vorteil eine Lichtquelle und einen Fotodetektor auf, wobei das von der Lichtquelle emittierte Licht durch die Winkelskalierung abhängig von der relativen Winkelstellung zwischen der ersten Bauteilgruppe und der zweiten Bauteilgruppe modulierbar ist und durch den Fotodetektor in Fotoströme umwandelbar ist.

Das Winkelmesssystem dient zu einer Messung einer Drehbewegung beispielsweise die Bestimmung einer vorliegenden Drehstellung oder Drehgeschwindigkeit.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung zweier Ausführungsbeispiele anhand der Figuren deutlich werden.

### KURZE BESCHREIBUNG DER ZEICHNUNGEN

- Figur 1: eine Längsschnittdarstellung eines Winkelmesssystems,
- Figur 2: eine Detailansicht des Winkelmesssystems,
- Figur 3: eine Detailansicht eines Winkelmesssystems, gemäß einem zweiten Ausführungsbeispiel.

### BESCHREIBUNG DER AUSFÜHRUNGSFORMEN

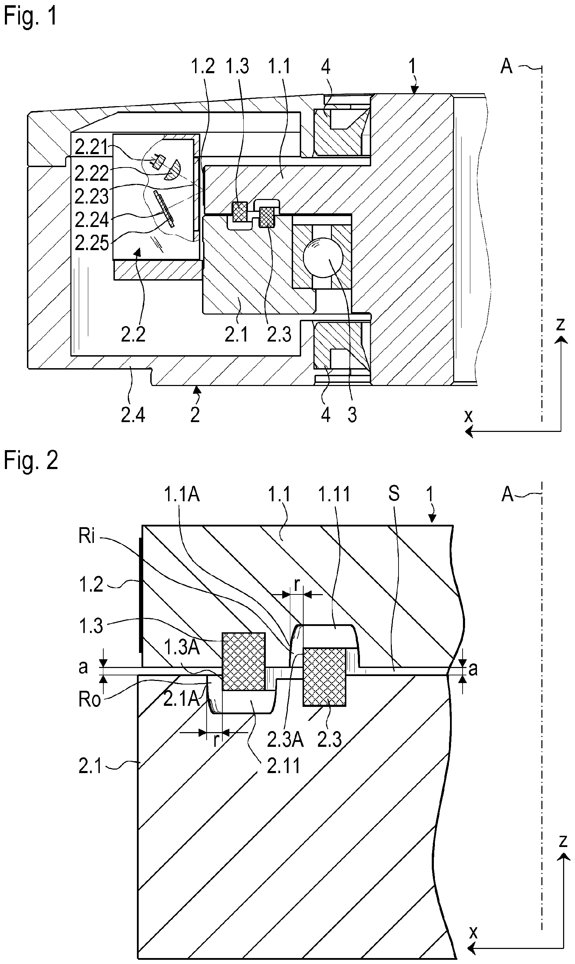

In der Figur 1 ist eine Teil-Längsschnittdarstellung eines Winkelmesssystems gezeigt. Dieses umfasst eine erste Bauteilgruppe 1, die im vorgestellten Ausführungsbeispiel als Rotor dient und zu einer zweiten Bauteilgruppe 2 um eine Achse A drehbar ist, wobei sich die Achse A gemäß den Figuren in z-Richtung erstreckt. Die zweite Bauteilgruppe 2 kann hier auch als Stator bezeichnet werden. Die erste Bauteilgruppe 1 ist gegenüber der zweiten Bauteilgruppe 2 durch ein Wälzlager, das Wälzkörper 3 umfasst, drehbar gelagert.

Die erste Bauteilgruppe 1 weist ein erstes Bauteil 1.1 auf, an dem eine Winkelskalierung 1.2 zentrisch bezüglich der Achse A angeordnet ist. Im vorgestellten Ausführungsbeispiel weist die Winkelskalierung 1.2 einen speziellen optisch wirkenden Aufbau auf, insbesondere unter Verwendung von reflektierenden Goldschichten, wobei die Winkelskalierung 1.2 mantelseitig am ersten Bauteil 1.1 angeordnet ist.

Die zweite Bauteilgruppe 2 weist ein zweites Bauteil 2.1 auf, welches mit einem ortsfesten Gehäuse 2.4 verbunden ist. Des Weiteren umfasst die zweite Bauteilgruppe 2 eine Abtasteinrichtung 2.2. Die Abtasteinrichtung 2.2 weist im vorgestellten Ausführungsbeispiel eine Lichtquelle 2.21, die beispielsweise als eine LED ausgestaltet ist, sowie eine Linse 2.22 auf. Zudem umfasst die Abtasteinrichtung 2.2 eine Abtastplatte 2.23 mit einem optischen Strichgitter und eine Leiterplatte 2.24, auf der Fotodetektoren 2.25 montiert sind. Zwischen dem ersten Bauteil 1.1 und dem zweiten Bauteil 2.1 erstreckt sich ein Spalt S (siehe Figur 2) mit axialer Ausdehnung a, also mit der Ausdehnung a in z-Richtung. Im vorgestellten Ausführungsbeispiel beträgt die Ausdehnung a etwa ¼ mm. Die Bauteile 1.1, 2.1 sind demnach beidseits des Spaltes S berührungsfrei zueinander angeordnet. Weiterhin ist die Winkelskalierung 1.2 relativ zum Spalt S radial außen angeordnet, also in einer x-Richtung versetzt angeordnet, wobei die x-Richtung orthogonal zur z-Richtung orientiert ist. Insbesondere ist die Winkelskalierung 1.2 am radial äußeren Ende des Spaltes S angeordnet. Mit anderen Worten ist das Winkelmesssystem so ausgestaltet, dass die Winkelskalierung 1.2 einen größeren Abstand zur Achse A hat als der Bereich, in dem sich der Spalt S erstreckt.

Das erste Bauteil 1.1 weist eine umlaufende Nut auf, in der ein ringförmiger erster Körper 1.3 befestigt - insbesondere geklebt - ist. Das zweite Bauteil 2.1 weist eine umlaufende zweite Nut 2.11 auf, wobei der erste Körper 1.3 berührungslos in die zweite Nut 2.11 beziehungsweise in das zweite Bauteil 2.1 axial eintaucht. Demgemäß weist das zweite Bauteil 2.1, insbesondere die zweite Nut 2.11, einen Abschnitt 2.1A auf, welcher mit radialem Spalt Ro (siehe Figur 2) einem sich in axialer Richtung erstreckenden Bereich 1.3A des ersten Körpers 1.3 radial außerhalb gegenüberliegt. Der ringförmige erste Körper 1.3 ist im vorgestellten Ausführungsbeispiel aus einem gemischt porigen Polyurethan-Kunststoff hergestellt.

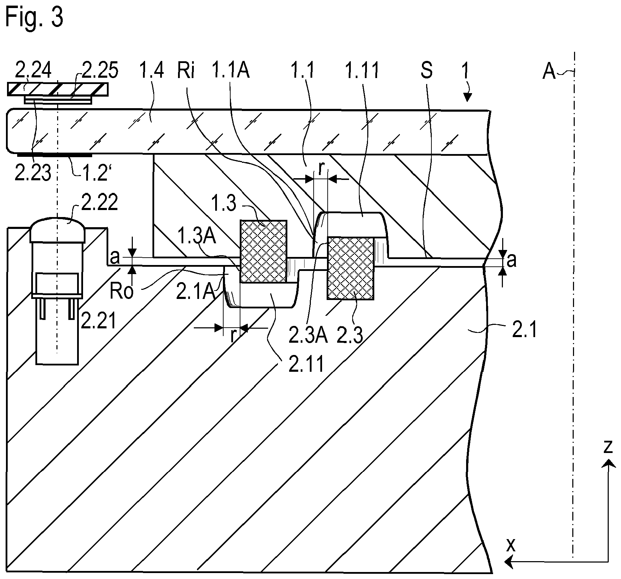

Zudem weist auch das zweite Bauteil 2.1 eine umlaufende Nut auf, in der ein ringförmiger zweiter Körper 2.3 befestigt - insbesondere auch hier geklebt - ist. Das erste Bauteil 1.1 weist eine umlaufende erste Nut 1.11 auf, wobei der zweite Körper 2.3 berührungslos in die erste Nut 1.11 beziehungsweise in das erste Bauteil 1.1 axial eintaucht. Infolgedessen weist auch das erste Bauteil 1.1 einen Abschnitt 1.1A auf, welcher mit radialem Spalt Ri (siehe Figur 3) einem sich in axialer Richtung erstreckenden Bereich 2.3A des zweiten Körpers 2.3 radial außerhalb gegenüberliegt.

Der erste Körper 1.3 ist demnach am ersten Bauteil 1.1 axial auskragend derart angeordnet und dimensioniert, dass der erste Körper 1.3 den Spalt S über die axiale Ausdehnung a des Spaltes S hinweg abdeckt. Gleichfalls ist der zweite Körper 2.3 am zweiten Bauteil 2.1 axial auskragend derart angeordnet und dimensioniert, dass dieser den Spalt S über seine axiale Ausdehnung a hinweg abdeckt. Im Ergebnis ist auf diese Weise eine Labyrinth-artige Struktur hergestellt.

Im vorgestellten Ausführungsbeispiel verlaufen die umlaufende Nut im ersten Bauteil 1.1, diejenige im zweiten Bauteil 2.1 sowie die erste Nut 1.11 als auch die zweite Nut 2.11 entlang von Kreislinien mit unterschiedlichen Durchmessern, wobei die Kreislinien konzentrisch angeordnet sind und ihren Mittelpunkt jeweils auf der Achse A haben.

Der ringförmige zweite Körper 2.3 ist im vorgestellten Ausführungsbeispiel wie der ringförmige erste Körper 1.3 aus einem gemischt porigen Polyurethan-Kunststoff hergestellt.

Im vorgestellten Ausführungsbeispiel sind die Spaltmaße r der radialen Spalte Ro, Ri jeweils gleich groß, wobei r hier den Wert 0,5 mm annimmt und jedenfalls größer ist als die axiale Ausdehnung a des axialen Spalts S.

Das Winkelmesssystem ist zum Anbau an eine Maschine bestimmt, wobei die erste Bauteilgruppe 1 zum drehfesten Anschluss an ein zu messendes Bauelement, etwa an einer Motorwelle, ausgebildet ist. Durch das Winkelmesssystem kann also die relative Winkelstellung zwischen dem Stator und dem Rotor beziehungsweise zwischen der ersten Bauteilgruppe 1 und der zweiten Bauteilgruppe 2 bestimmt werden.

Damit das Innere des Gehäuses 2.4, insbesondere die Winkelskalierung 1.2, vor von außen kommenden Verunreinigungen geschützt ist, sind Dichtungen 4 zwischen der ersten Bauteilgruppe 1 und der zweiten Bauteilgruppe 2 angeordnet.

Im Betrieb des Winkelmesssystems wird das von der Lichtquelle 2.21 emittierte Licht kollimiert und nach Durchtritt durch die Abtastplatte 2.23 von der Winkelskalierung 1.2 reflektiert und entsprechend der Winkelstellung zwischen der ersten Bauteilgruppe 1 und der zweiten Bauteilgruppe 2 moduliert. Das modulierte Licht trifft schließlich auf die Fotodetektoren 2.25 und wird durch diese in elektrische Signale umgewandelt. Unter anderem umfasst die Abtasteinrichtung 2.2 auch elektronische Bauelemente zur Signalformung - beispielsweise zur Verstärkung und Digitalisierung - der von den Fotodetektoren 2.25 gelieferten Abtastsignale. Über ein in den Figuren nicht gezeigtes Anschlusskabel wird eine elektrische Verbindung zwischen dem Winkelmesssystem und einer Folgeelektronik hergestellt, so dass elektrische Signale und elektrische Energie zwischen der Folgeelektronik und dem Winkelmesssystem übertragen werden können. Auf diese Weise ist durch die Abtasteinrichtung 2.2 ein von der Stellung der Winkelskalierung 1.2 abhängiges Positionssignal erzeugbar.

Im Betrieb des Winkelmesssystems kann die erste Bauteilgruppe 1 und damit auch das erste Bauteil 1.1 mit erheblicher Drehzahl rotieren, wobei es für einen einwandfreien Betrieb des Winkelmesssystems erforderlich ist, dass die Wälzkörper 3 des Lagers geschmiert sind, weshalb hier Schmiermittel beziehungsweise Schmierfett vorgesehen ist. Durch die Drehbewegung entsteht gleichsam eine Sogwirkung, durch die Schmiermittelbestandteile des Schmierfetts, z.B. in Form einer öligen Flüssigkeit, durch den Spalt S radial nach außen bewegt werden. Zudem sind die Schmiermittelbestandteile Zentrifugalkräften ausgesetzt. Folglich wandern die Schmiermittelbestandteile im Spalt S nach außen und treffen dann auf den zweiten Körper 2.3, der Poren zur Aufnahme des Schmiermittels beziehungsweise dessen Bestandteile aufweist. Die Aufnahmekapazität für Schmiermittel beziehungsweise dessen Bestandteile des zweiten Körpers 2.3 ist so bemessen, dass dieser alleine schon die gesamte zu erwartende Schmiermittelmenge aufnehmen kann. Zur weiteren Erhöhung der Sicherheit, also zur sicheren Vermeidung, dass Schmiermittel zur Winkelskalierung 1.2 gelangen kann, ist der erste Körper 1.3 vorgesehen, welcher ebenso Schmiermittel aufnehmen kann.

Anhand der Figur 3 wird ein zweites Ausführungsbeispiel erläutert. Das Winkelmesssystem gemäß dem zweiten Ausführungsbeispiel unterscheidet sich von dem des ersten Ausführungsbeispiels im Wesentlichen dadurch, dass am ersten Bauteil 1.1 eine transparente Scheibe 1.4 drehfest fixiert ist. Die Scheibe 1.4 besteht aus Glas und ist ringförmig ausgestaltet. Sie weist naturgemäß zwei Stirnflächen auf, wobei auf einer der Stirnflächen eine Winkelskalierung 1.2' aufgebracht ist. Die Winkelskalierung 1.2' kann beispielsweise als eine inkrementale Teilung mit radial orientierten Skalenstrichen ausgestaltet sein, wobei jedoch zusätzlich oder alternativ auch ein absoluter Code vorgesehen sein kann. Die Stirnflächen liegen in einer Ebene, die mit einer orthogonalen Richtungskomponente in Bezug auf die z-Richtung orientiert ist. Insbesondere liegen die Stirnflächen in einer Ebene, die von der Achse A orthogonal geschnitten wird.

Im Betrieb des Winkelmesssystems wird das von der Lichtquelle 2.21 emittierte Licht durch die Linse 2.22 kollimiert. Das Licht tritt dann durch die Winkelskalierung 1.2' und die Scheibe 1.4 sowie durch die Abtastplatte 2.23 hindurch. Dabei wird das Licht entsprechend der Winkelstellung zwischen der ersten Bauteilgruppe 1 und der zweiten Bauteilgruppe 2 moduliert. Das modulierte Licht trifft schließlich auf die Fotodetektoren 2.25, die auf einer Leiterplatte 2.24 montiert sind, und wird durch diese in elektrische Signale umgewandelt. Auch in diesem Ausführungsbeispiel werden die Signale durch elektronische Bauelemente verstärkt und umgeformt. Die Lichtquelle 2.21, die Linse 2.22, die Abtastplatte 2.23 sowie die Leiterplatte 2.24 mit den Fotodetektoren 2.25 sind der zweiten Bauteilgruppe zugeordnet, so dass die Winkelskalierung 1.2' relativ zur diesen Elementen drehbar ist.

Durch die spezielle Ausgestaltung des Winkelmesssystems ist es nun möglich Schmiermittelreste, z. B. Öltröpfchen, die aus dem Schmiermittel austreten, von der Winkelskalierung 1.2, 1.2' fern zu halten. Derartige Schmiermittelreste führen häufig zu fehlerhaften Messungen, weil dadurch der Strahlengang des von der Lichtquelle 2.21 emittierten Lichts beeinflusst werden kann. Dieses Fernhalten der Schmiermittelreste wird auch während eines Betriebs bei hohen Drehzahlen gewährleistet. Andererseits wird durch spezielle Konstruktion sichergestellt, dass durch die Maßnahmen zum Fernhalten von Schmiermittelresten von der Winkelskalierung 1.2, 1.2' keine Reduzierung der Messgenauigkeit, insbesondere durch die berührungslose Ausführung, bedingt.

## Patentansprüche

1. Winkelmesssystem, umfassend eine erste Bauteilgruppe (1) und eine zweite Bauteilgruppe (2), wobei zwischen den Bauteilgruppen (1, 2) Wälzkörper (3) angeordnet sind, so dass die erste Bauteilgruppe (1) relativ zur zweiten Bauteilgruppe (2) um eine Achse (A) drehbar gelagert ist, wobei
- die erste Bauteilgruppe (1) ein erstes Bauteil (1.1) und eine Winkelskalierung (1.2; 1.2') aufweist,
- die zweite Bauteilgruppe (2) ein zweites Bauteil (2.1) und eine Abtasteinrichtung (2.2) aufweist, wobei
durch die Abtasteinrichtung (2.2) ein von der Stellung der Winkelskalierung (1.2; 1.2') abhängiges Positionssignal erzeugbar ist, und
sich ein Spalt (S) mit axialer Ausdehnung (a) zwischen dem ersten Bauteil (1.1) und dem zweiten Bauteil (2.1) erstreckt, so dass die Bauteile (1.1, 2.1) beidseits des Spaltes (S) berührungsfrei zueinander angeordnet sind, **dadurch gekennzeichnet, dass**
a) am ersten Bauteil (1.1) ein ringförmiger erster Körper (1.3) befestigt ist, der bezüglich der zweiten Bauteilgruppe (2) berührungslos angeordnet ist, wobei das zweite Bauteil (2.1) einen Abschnitt (2.1A) aufweist, welcher mit radialem Spalt (Ro) einem sich in axialer Richtung erstreckenden Bereich (1.3A) des ersten Körpers (1.3) radial außerhalb gegenüberliegt und der erste Körper (1.3) in Bezug auf die Wälzkörper (3) radial außerhalb um die Achse (A) umlaufend angeordnet ist und durch den ersten Körper (1.3) Schmiermittel aufnehmbar ist, und / oder
b) am zweiten Bauteil (2.1) ein ringförmiger zweiter Körper (2.3) befestigt ist, der bezüglich der ersten Bauteilgruppe (1) berührungslos angeordnet ist, wobei das erste Bauteil (1.1) einen Abschnitt (1.2A) aufweist, welcher mit radialem Spalt (Ri) einem sich in axialer Richtung erstreckenden Bereich (2.3A) des zweiten Körpers (2.3) radial außerhalb gegenüberliegt, wobei der zweite Körper (2.3) in Bezug auf die Wälzkörper (3) radial außerhalb um die Achse (A) umlaufend angeordnet ist und durch den zweiten Körper (2.3) Schmiermittel aufnehmbar ist.

2. Winkelmesssystem gemäß dem Anspruch 1, wobei der erste beziehungsweise der zweite Körper (1.3, 2.3) Poren zur Aufnahme des Schmiermittels aufweist.

3. Winkelmesssystem gemäß dem Anspruch 2, wobei der erste beziehungsweise zweite Körper (1.3, 2.3) gemischt porig ausgestaltet ist, so dass dieser sowohl geschlossene Hohlräume aufweist als auch Hohlräume, die untereinander und mit der Umgebung in Verbindung stehen.

4. Winkelmesssystem gemäß einem der vorhergehenden Ansprüche, wobei der erste beziehungsweise der zweite Körper (1.3, 2.3) aus einem Material, welches einen Polyurethan-Kunststoff umfasst, hergestellt ist.

5. Winkelmesssystem gemäß einem der vorhergehenden Ansprüche, wobei
a) der erste Körper (1.3) am ersten Bauteil (1.1) axial auskragend derart angeordnet und dimensioniert ist, dass dieser den Spalt (S) über seine axiale Ausdehnung (a) hinweg abdeckt, und / oder
b) der zweite Körper (2.3) am zweiten Bauteil (2.1) axial auskragend derart angeordnet und dimensioniert ist, dass dieser den Spalt (S) über seine axiale Ausdehnung (a) hinweg abdeckt.

6. Winkelmesssystem gemäß einem der vorhergehenden Ansprüche, wobei
a) der erste Körper (1.3) am ersten Bauteil (1.1) befestigt ist und berührungslos in eine umlaufende zweite Nut (2.11) im zweiten Bauteil (2.1) eintaucht, und / oder
b) der zweite Körper (2.3) am zweiten Bauteil (2.1) befestigt ist und berührungslos in eine umlaufende zweite Nut (1.11) im ersten Bauteil (1.1) eintaucht.

7. Winkelmesssystem gemäß einem der vorhergehenden Ansprüche, wobei
a) der erste Körper (1.3) am ersten Bauteil (1.1) in einer umlaufenden ersten Nut befestigt ist und berührungslos in eine umlaufende zweite Nut (2.11) im zweiten Bauteil (2.1) eintaucht, und / oder
b) der zweite Körper (2.3) am zweiten Bauteil (2.1) in einer umlaufenden ersten Nut befestigt ist und berührungslos in eine umlaufende zweite Nut (1.11) im ersten Bauteil (1.1) eintaucht.

8. Winkelmesssystem gemäß einem der vorhergehenden Ansprüche, wobei am ersten Bauteil (1.1) der ringförmige erste Körper (1.3) befestigt ist und am zweiten Bauteil (2.1) der ringförmige zweite Körper (2.3) befestigt ist, wobei der zweite ringförmige Körper (2.3) in Bezug auf den ersten ringförmigen Körper (1.3) konzentrisch angeordnet ist.

9. Winkelmesssystem gemäß einem der vorhergehenden Ansprüche, wobei am ersten Bauteil (1.1) der ringförmige erste Körper (1.3) befestigt ist und am zweiten Bauteil (2.1) der ringförmige zweite Körper (2.3) befestigt ist, wobei der zweite ringförmige Körper (2.3) in Bezug auf den ersten ringförmigen Körper (1.3) radial außerhalb angeordnet ist.

10. Winkelmesssystem gemäß einem der vorhergehenden Ansprüche, wobei die Abtasteinrichtung (2.2) eine Lichtquelle (2.21) und einen Fotodetektor (2.25) aufweist, wobei das von der Lichtquelle (2.21) emittierte Licht durch die Winkelskalierung (1.2; 1.2') abhängig von der relativen Winkelstellung modulierbar ist und durch den Fotodetektor (2.25) in Fotoströme umwandelbar ist.

## Claims

1. Angle measuring system comprising a first component group (1) and a second component group (2), rolling elements (3) being arranged between the component groups (1, 2), so that the first component group (1) is rotatably mounted about an axis (A) relative to the second component group (2),
- the first component group (1) having a first component (1.1) and an angle scale (1.2; 1.2'),
- the second component group (2) having a second component (2.1) and a scanning device (2.2),
it being possible for a position signal to be generated by the scanning device (2.2), depending on the position of the angle scale (1.2; 1.2'), and
a gap (S) with an axial extent (a) extending between the first component (1.1) and the second component (2.1), so that the components (1.1, 2.1) are arranged on both sides of the gap (S) with no contact with each other,
**characterized in that**
a) an annular first body (1.3) is fixed to the first component (1.1) and is arranged without contact with respect to the second component group (2), wherein the second component (2.1) has a section (2.1A) which is located radially outside a region (1.3A) of the first body (1.3) with a radial gap (Rc) extending in the axial direction, and the first body (1.3) is arranged radially outside in relation to the rolling element (3) and circumferentially around the axis (A), and lubricant can be held by the first body (1.3), and/or
b) an annular second body (2.3) is fixed to the second component (2.1) and is arranged without contact with respect to the first component group (1), wherein the first component (1.1) has a section (1.2A) which is located radially outside a region (2.3A) of the second body (2.3) with a radial gap (Ri) extending in the axial direction, and the second body (2.3) is arranged radially outside in relation to the rolling element (3) and circumferentially around the axis (A), and lubricant can be held by the second body (2-3).

2. Angle measuring system according to Claim 1, wherein the first and/or the second body (1.3, 2.3) has pores to hold the lubricant.

3. Angle measuring system according to Claim 2, wherein the first and/or second body (1.3, 2.3) is configured with mixed pores, so that these both have closed cells and also hollow cells, which are connected to one another and to the environment.

4. Angle measuring system according to one of the preceding claims, wherein the first and/or the second body (1.3, 2.3) is produced, comprising of a material which comprises a polyurethane plastic.

5. Angle measuring system according to one of the preceding claims, wherein
a) the first body (1.3) is arranged on the first component (1.1) in an axially protruding manner and is dimensioned such that it covers the gap (S) beyond the axial extent (a) of the latter, and/or
b) the second body (2.3) is arranged on the second component (2.1) in an axially protruding manner and is dimensioned such that it covers the gap (S) beyond the axial extent (a) of the latter.

6. Angle measuring system according to one of the preceding claims, wherein
a) the first body (1.3) is fixed to the first component (1.1) and extends without contact into a circumferential second groove (2.11) in the second component (2.1), and/or
b) the second body (2.3) is fixed to the second component (2.1) and extends without contact into a circumferential second groove (1.11) in the first component (1.1).

7. Angle measuring system according to one of the preceding claims, wherein
a) the first body (1.3) is fixed to the first component (1.1) in a circumferential first groove and extends without contact into a circumferential second groove (2.11) in the second component (2.1), and/or
b) the second body (2.3) is fixed to the second component (2.1) in a circumferential first groove and extends without contact into a circumferential second groove (1.11) in the first component (1.1).

8. Angle measuring system according to one of the preceding claims, wherein the annular first body (1.3) is fixed to the first component (1.1), and the annular second body (2.3) is fixed to the second component (2.1), wherein the second annular body (2.3) is arranged concentrically in relation to the first annular body (1.3).

9. Angle measuring system according to one of the preceding claims, wherein the annular first body (1.3) is fixed to the first component (1.1), and the annular second body (2.3) is fixed to the second component (2.1), wherein the second annular body (2.3) is arranged radially outside in relation to the first annular body (1.3).

10. Angle measuring system according to one of the preceding claims, wherein the scanning device (2.2) has a light source (2.21) and a photodetector (2.25), wherein the light emitted by the light source (2.21) can be modulated by the angle scale (1.2; 1.2') as a function of the relative angular position and can be converted into photocurrents by the photodetector (2.25).

## Revendications

1. Système de mesure d'angle comprenant un premier groupe de composants (1) et un deuxième groupe de composants (2), dans lequel des éléments de roulement (3) sont disposés entre les groupes de composants (1, 2) de manière à ce que le premier groupe de composants (1) soit monté, par rapport au deuxième groupe de composants (2), afin de pouvoir tourner autour d'un axe (A), dans lequel
- le premier groupe de composants (1) comprend un premier composant (1.1) et une échelle angulaire (1.2 ; 1.2'),
- le deuxième groupe de composants (2) comprend un deuxième composant (2.1) et un dispositif de balayage (2.2), dans lequel
un signal de position dépendant de la position de l'échelle angulaire (1.2 ; 1.2') peut être généré par le dispositif de balayage (2. 2), et
un interstice (S) présentant une extension, axiale (a) s'étend entre le premier composant (1.1) et le deuxième composant (2.1) de manière à ce que les composants (1.1, 2.1) soient disposés de chaque côté de l'interstice (S) sans contact mutuel, **caractérisé en ce**
a) un premier corps annulaire (1.3) est fixé au premier composant (1.1) et est disposé sans contact par rapport au deuxième groupe de composants (2), dans lequel le deuxième composant (2.1) présente une section (2.1A) qui est radialement opposée extérieurement, avec un interstice (Ro), à une zone (1.3A) du premier corps (1.3) s'étendant dans la direction axiale, et le premier corps (1.3) est disposé de manière circonférentielle radialement extérieurement autour de l'axe (A) par rapport aux éléments de roulement (3), et un lubrifiant peut être reçu à travers le premier corps (1.3), et/ou
b) un deuxième corps annulaire (2.3) est fixé au deuxième composant (2.1) et est disposé sans contact par rapport au premier groupe de composants (1), dans lequel le premier composant (1.1) présente une section (1.2A) qui est radialement opposée extérieurement, avec un interstice radial (Ri), à une zone (2.3A) du deuxième corps (2.3) s'étendant dans la direction axiale, dans lequel le deuxième corps (2.3) est disposé de manière circonférentielle radialement extérieurement autour de l'axe (A) par rapport aux éléments de roulement (3), et un lubrifiant peut être reçu à travers le deuxième corps (2.3).

2. Système de mesure d'angle selon la revendication 1, dans lequel le premier ou le deuxième corps (1.3, 2.3) présente respectivement des pores permettant de recevoir le lubrifiant.

3. Système de mesure d'angle selon la revendication 2, dans lequel le premier ou le deuxième corps (1.3, 2.3) est respectivement de conception poreuse mixte, de sorte qu'il présente à la fois des cavités fermées et des cavités qui communiquent entre elles et avec l'environnement.

4. Système de mesure d'angle selon l'une des revendications précédentes, dans lequel les premier et deuxième corps (1.3, 2.3) sont respectivement réalisés en un matériau comprenant une matière plastique de polyuréthane.

5. Système de mesure d'angle selon l'une des revendications précédentes, dans lequel
a) le premier corps (1.3) est disposé en porte-à-faux axialement sur le premier composant (1.1) et est dimensionné de telle manière qu'il recouvre l'interstice (S) sur son étendue axiale (a), et/ou
b) le deuxième corps (2.3) est disposé en porte-à-faux axialement sur le deuxième composant (2.1) et est dimensionné de telle manière qu'il recouvre l'interstice (S) sur son étendue axiale (a).

6. Système de mesure d'angle selon l'une des revendications précédentes, dans lequel
a) le premier corps (1.3) est fixé au premier composant (1.1) et plonge sans contact dans une deuxième rainure circonférentielle (2.11) présente dans le deuxième composant (2.1), et/ou
b) le deuxième corps (2.3) est fixé au deuxième composant (2.1) et plonge sans contact dans une deuxième rainure circonférentielle (1.11) présente dans le premier composant (1.1).

7. Système de mesure d'angle selon l'une des revendications précédentes, dans lequel
a) le premier corps (1.3) est fixé au premier composant (1.1) dans une première rainure circonférentielle et plonge sans contact dans une deuxième rainure circonférentielle (2.11) présente dans le deuxième composant (2.1), et/ou
b) le deuxième corps (2.3) est fixé au deuxième composant (2.1) dans une première rainure circonférentielle et plonge sans contact dans une deuxième rainure circonférentielle (1.11) présente dans le premier composant (1.1).

8. Système de mesure d'angle selon l'une des revendications précédentes, dans lequel le premier corps annulaire (1.3) est fixé au premier composant (1.1) et le deuxième corps annulaire (2.3) est fixé au deuxième composant (2.1), dans lequel le deuxième corps annulaire (2.3) est disposé concentriquement par rapport au premier corps annulaire (1.3).

9. Système de mesure d'angle selon l'une des revendications précédentes, dans lequel le premier corps annulaire (1.3) est fixé au premier composant (1.1) et le deuxième corps annulaire (2.3) est fixé au deuxième composant (2.1), dans lequel le deuxième corps annulaire (2.3) est disposé radialement à l'extérieur par rapport au premier corps annulaire (1.3).

10. Système de mesure d'angle selon l'une des revendications précédentes, dans lequel le dispositif de balayage (2.2) comporte une source lumineuse (2.21) et un photodétecteur (2.25), dans lequel la lumière émise par la source lumineuse (2.21) peut être modulée par l'échelle angulaire (1.2 ; 1.2') en fonction de la position angulaire relative et peut être convertie en des courants photoélectriques par le photodétecteur (2.25).
